# EUROPEAN PATENT APPLICATION

(11) **EP 4 850 884 A1**
(43) Date of publication of application: **09.12.2026**
(21) Application number: 26178812.9
(22) Date of filing: 14.05.2026
(51) Int. Cl.: B29C 45/16, B29K 21/00, B29L 31/46

(54) **CUSHION HANDLE WITH WATER SOLUBLE SUPPORT**

(30) Priority: 03.06.2025 US 202519226911
(71) Applicant: Stanley Black & Decker MEA FZE, Dubai (AE)
(72) Inventor: CHEN, Cheng-Wei, 40757 Taichung City (TW); LIN, Chia-Hui, 40757 Taichung City (TW); TSENG, Yu-Lung, 40757 Taichung City (TW)
(74) Representative: Gill Jennings & Every LLP

(57) **Abstract**

Methods of manufacture for hammer and striking objects handle design, and more specifically to handle design via multi-shot injection molding using water soluble materials. The method includes a multi-shot mold process, where a replica mold core (resembling a tool's handle) is first encased in polypropylene, then polyvinyl alcohol, then a thermoplastic elastomer, where there are holes within the thermoplastic elastomer layer. The polyvinyl alcohol layer is then dissolved, resulting in at least one hollow portion between the polypropylene and the thermoplastic elastomer, and thereby forming a cushion handle of the tool.

## Description

### BACKGROUND

### Technical Field

The present disclosure relates to handle design, and more specifically to handle design via multi-shot injection molding using water soluble materials.

### Introduction

When using tools, users want a comfortable grip that minimizes the force/vibrations which are felt by the user. For example, when using a hammer, as the hammer strikes an object an instantaneous impact force is generated. This force causes both the hammer and the struck object to deform, while also producing vibrations which are transmitted through the tool to the human body. Such vibrations can lead to muscle fatigue in the hands and arms, increasing discomfort and reducing work efficiency, while also affecting the user's ability to control the tool, thereby decreasing work precision and increasing the risk of accidents and errors.

### SUMMARY

Additional features and advantages of the disclosure will be set forth in the description that follows, and in part will be understood from the description, or can be learned by practice of the herein disclosed principles. The features and advantages of the disclosure can be realized and obtained by means of the instruments and combinations particularly pointed out in the appended claims. These and other features of the disclosure will become more fully apparent from the following description and appended claims, or can be learned by the practice of the principles set forth herein.

Disclosed are methods, handles, and striking objects which provide a technical solution to the technical problem described. A method for performing the concepts disclosed herein can include: inserting at a replica mold core of least a portion of the tool into a first mold; injecting polypropylene into the first mold, resulting in a polypropylene encased part; inserting at least a portion of the polypropylene encased part into a second mold; injecting polyvinyl alcohol (PVA) into the second mold, resulting in a PVA/polypropylene encased part; inserting the PVA/polypropylene encased part into a third mold, the third mold configured to create at least one through hole in a resulting part; injecting thermoplastic elastomer (TPE) into the third mold, resulting in a TPE/PVA/polypropylene encased part with at least one through hole in the TPE of the TPE/PVA/polypropylene encased part; dissolving the PVA of the TPE/PVA/polypropylene encased part using water flowing through the at least one through hole, resulting in a TPE/polypropylene encased part having at least one hollow portion between the TPE and the polypropylene, the TPE/polypropylene encased part having at least one hollow portion between the TPE and the polypropylene forming the cushion handle of the tool.

A handle configured to perform the concepts disclosed herein can include: a replica mold core of at least a portion of a tool; a layer of polypropylene (PP) encompassing the replica mold core, the layer of PP having an interior portion bonded to the at least a portion of the tool and an exterior portion; a layer of thermoplastic elastomer (TPE) encompassing the replica mold core, the layer of TPE bonded to a first portion of the exterior portion of the layer of PP, wherein a remaining portion of the exterior portion of the PP comprises at least one hollow portion between the layer of PP and the layer of TPE.

A striking object configured as disclosed herein can include: a head; and a handle, the handle encircled by: a layer of polypropylene (PP), the layer of PP having an interior portion bonded to the handle and an exterior portion; and a layer of thermoplastic elastomer (TPE) encompassing bonded to a first portion of the exterior portion of the layer of PP, wherein a remaining portion of the exterior portion of the PP comprises at least one hollow portion between the layer of PP and the layer of TPE.

### BRIEF DESCRIPTION OF THE DRAWINGS

FIG. 1 illustrates an example of a hammer with handle components configured as disclosed herein;
FIG. 2 illustrates an example of a hammer handle's interior being created as disclosed herein;
FIG. 3 illustrates an example of a hammer handle's exterior being created as disclosed herein;
FIG. 4 illustrates an example of a hammer with handle components configured as disclosed herein;
FIG. 5 illustrates an example of a hammer handle configured as disclosed herein after water soluble materials have been removed; and
FIG. 6 illustrates an example method embodiment.

### DETAILED DESCRIPTION

Various embodiments of the disclosure are described in detail below. While specific implementations are described, this is done for illustration purposes only. Other components and configurations may be used without parting from the spirit and scope of the disclosure.

Whether using a hammer, swinging an axe, using a power tool, the handles of hand tools need to be comfortable. More specifically, it is desirable that the handle reduces the vibrations felt by the user. Handles generated using the methods and processes disclosed herein provide reduced transfer of vibrations to the users, making for a more comfortable and enjoyable experience, while also reducing fatigue of the user.

The handles created/generated as disclosed herein are created using a multi-shot injection molding, where each subsequent layer of molding uses distinct materials and/or molds. At least one of the layers of materials is water soluble, and a subsequent layer of molding (i.e., a layer of material injected over an earlier layer of material) will have through holes which allow water to interact with the water-soluble underlying layer, such that as the handle is exposed to water portions of the interior of the handle made of that water-soluble layer are removed and become filled with air. The result is that the handle has interior portions which are partially air filled, making for a more comfortable handle.

Consider the following example. A solid hammer forging includes the head of the hammer, as well as a shaft which will be covered in other materials to become the handle. The shaft may be covered in a first mold material, such as polypropylene (PP). Preferably, the handle is formed using a replica mold core, shaped like a shaft of the forging, which serves to create a hollow space within the mold materials as the handle is formed.

After the first mold material is applied to the replica mold core, the first mold material is partially covered using a water-soluble material, such as Polyvinyl Alcohol (PVA). The water-soluble material does not completely encompass the first mold material, nor is the water-soluble material evenly applied. Instead, preferably, the water-soluble material forms compression space in the form of pockets/bubbles where larger amounts of the water-soluble material (i.e., having an arc shape), with these pockets/bubbles having a line of water-soluble material connecting the respective pockets/bubbles. In addition, because the water-soluble material does not completely encompass the first mold material, a subsequent material injected after the water-soluble material can directly bond with the first mold material.

In some configurations, there will be a single contiguous piece of water-soluble material applied over the first mold material, whereas in other configurations there can be two, three, or more non-connected pieces of water-soluble material applied over the first mold material. For example, there could be a piece of water-soluble material molded to the front of the tool's handle, and another molded to the back of the tools handle. In another example, a first piece of water-soluble material may be molded to the left side of a handle, while a second piece of water-soluble material may be molded to the right side of the handle. In yet other configurations, there could be three, four, or any number of water-soluble material pieces distributed around the handle.

The water-soluble material can be any water-soluble material known to those of skill in the art, including the example material PVA. The water-soluble material should be capable of being used with injection molding, and should be removable through water solubility. In the case of PVA, its removal efficiency can be enhanced by increasing the water temperature and adding ultrasonic cleaning.

Once the water-soluble material is applied over the first mold material, a third mold material is applied over the water-soluble material and still exposed portions of the first mold material (i.e., those portions of the first mold material not covered by the water-soluble material). In some configurations, a lip or hilt of the first mold material at the top of the handle may remain uncovered by both the water-soluble material and the third mold material. Non-limiting examples of third mold material can include thermoplastic rubber (TPR), thermoplastic polyurethane (TPU), or other Thermoplastic Elastomer (TPE).

The mold for the third mold material creates through holes in the third mold material, granting access to the water-soluble material. As the water dissolves the water-soluble material between the first mold material and the third mold material, a flow channel for the water is formed. After exposure to the water, the flow channel will be empty of both the water-soluble material and the water, filling instead with air. As the user grips the handle, the air-filled flow channels reduce the vibrations conveyed to the user.

After the molding process is complete, the replica mold core can be replaced with the forging, leading to a complete/assembled tool. In some configurations, a pin can be inserted through a hole in the handle of the tool's solid metal forging and one or more of the layers, holding the forging to the distinct layers. Preferably, the pin is inserted after all layers are applied, with holes existing in the non-water-soluble layers (e.g., layers one and three in the example above), then glued or otherwise locked into place. In other configurations, the pin may only extend through the interior layers (i.e., the forging and the first mold material), but not the third mold material. In yet other configurations, the pin may pass through the third mold material, such that the pin is then visible on the exterior of the resulting handle.

The handle design (and process for constructing such handles) disclosed herein can be applied to any item requiring a human being's grip. With respect to hand tools, non-limiting examples of hand tools which can have a handle configured as disclosed herein can include hammers, axes, pick axes, saws, etc. Power tools can likewise have handles configured as disclosed herein. While the preferred use is for tools, the concepts disclosed herein can be applied to anything where a grip is required.

While the examples given herein use three layers of molding materials (e.g., a first layer with a first/base mold material, a second layer of water-soluble material, and a third layer with a third mold material), in practice there can be more layers. For example, there could be five layers, where the water-soluble material is in the fourth layer and an additional fifth layer is placed over the water-soluble material. However, it is key that the water-soluble material be encapsulated between two layers. If, for example, there are three layers, the water-soluble material will be encapsulated between the first and third layers, with only predesigned through holes in the last/third layer allowing access to the water-soluble material.

By doing a multi-shot injection molding process as described vibration transmission is reduced by including intricate structures within the tool handle itself, but which are not visible from the exterior. This internal design is distinct from conventional designs, which are often limited by the constraints of mold opening directions. Thus, this design method reduces and dissipates the energy generated by the tool, thereby reducing the amount of vibration transmitted to the user.

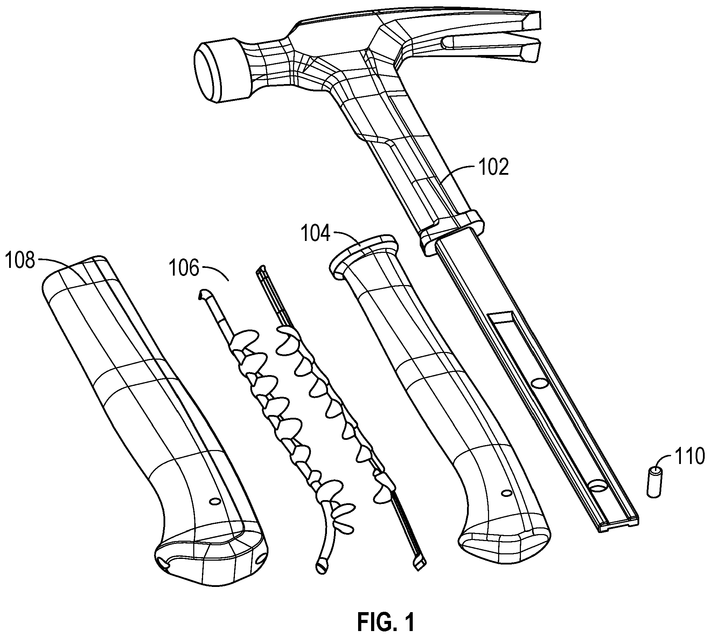

FIG. 1 illustrates an example of a hammer with handle components configured as disclosed herein. As illustrated, there is a solid forging 102, a first layer of molding material 104 (such as Polypropylene (PP)), a water-soluble material 106 (such as Polyvinyl Alcohol (PVA)), and a third layer of molding material 108 (such as thermoplastic rubber or another thermoplastic elastomer (TPE)). A pin 110 can be placed through a hole in the forging 102 and holes in the first layer of molding material 104 and the third layer of molding material 108 to hold the components together.

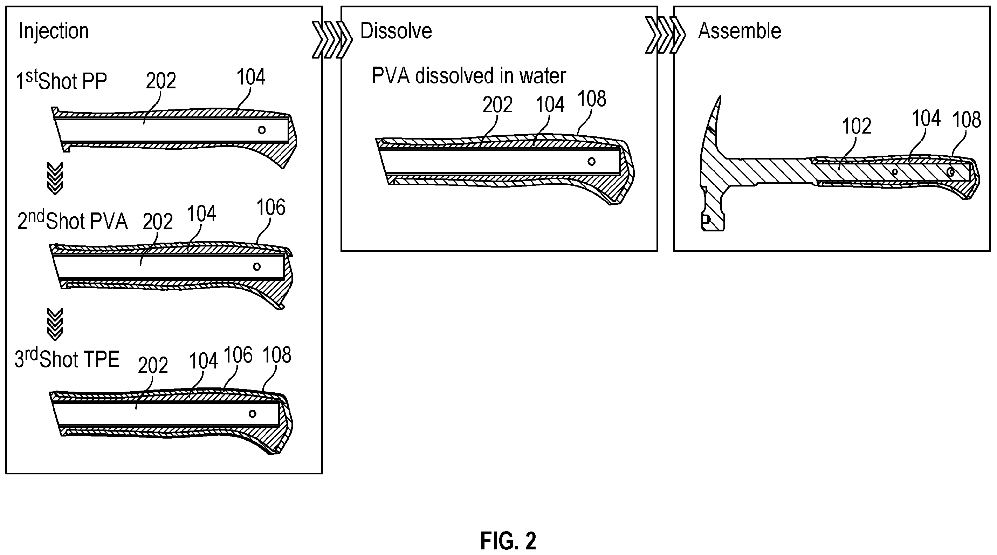

FIG. 2 illustrates an example of a hammer handle's interior being created as disclosed herein. First, there are a series of injections. In a first shot, Polypropylene (PP) 104 is applied, encompassing a handle portion of a replica mold core 202. After the PP 104 has cooled/solidified, a second shot is made over the PP 104. This second shot material is water-soluble Polyvinyl Alcohol (PVA) 106. After the PVA 106 has cooled/solidified, a third shot is made encapsulating both the PP 104 and the PVA 106. This third shot material is thermoplastic rubber or another thermoplastic elastomer (TPE) 108. Next, the PVA 106 is dissolved by placing the handle in water, such that (as illustrated) the replica mold core 202 is now encompassed by the PP 104 and TPE 108. Where the PVA 106 previously existed, there are now air pockets/channels. The replica mold core 202 is then removed and replaced with the forging 102. Finally, the hammer assembly is completed by inserting a pin through holes in the various layers. The pin can be secured in place using, for example, adhesives or other mechanisms known to those of skill in the art.

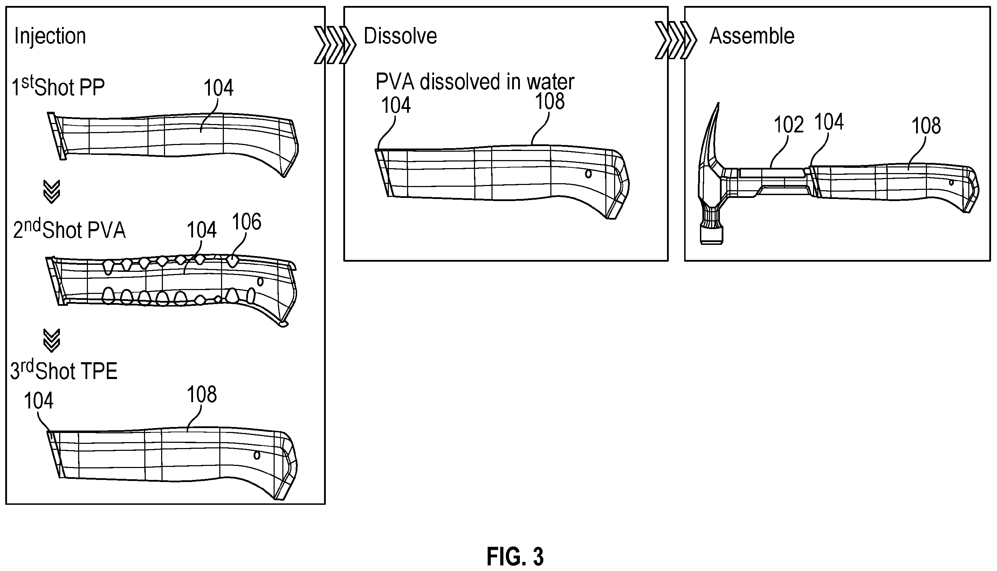

FIG. 3 illustrates an example of a hammer handle's exterior being created as disclosed herein. This process is the same process illustrated in FIG. 2, with the difference being that FIG. 3 illustrates the exterior of the hammer handle at each step of the process. First, the multi-shot injection process results in the replica mold core being covered in PP 104, then PVA 106, and finally TPE 108. Then the PVA 106 is dissolved in water, resulting in the replica mold core surrounding by the PP 104 layer and the TPE 108 layer, with air gaps existing where the PVA 106 was previously located. The replica mold core is then removed and replaced with the forging 102. Finally, the pin is inserted and the hammer is considered assembled.

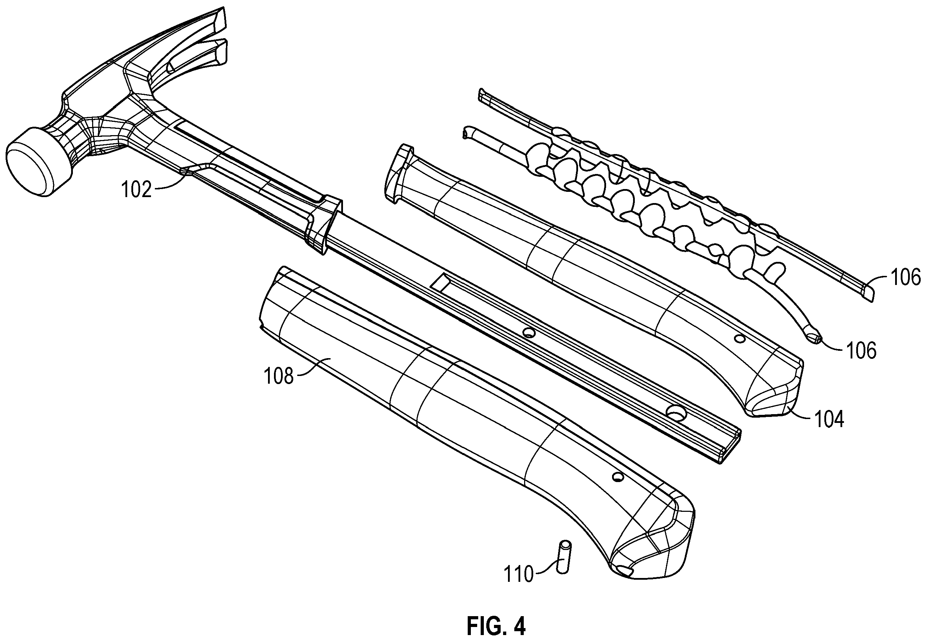

FIG. 4 illustrates an example of a hammer with handle components configured as disclosed herein. These are the same components illustrated in FIG. 1 from a different perspective. As illustrated, there is a forging 102 of a hammer (including both the head of the hammer, as well as a handle portion extending from the head), a PP 104 layer, a PVA 106 layer, and a TPE 108 layer, all of which can be further coupled together using a pin 110.

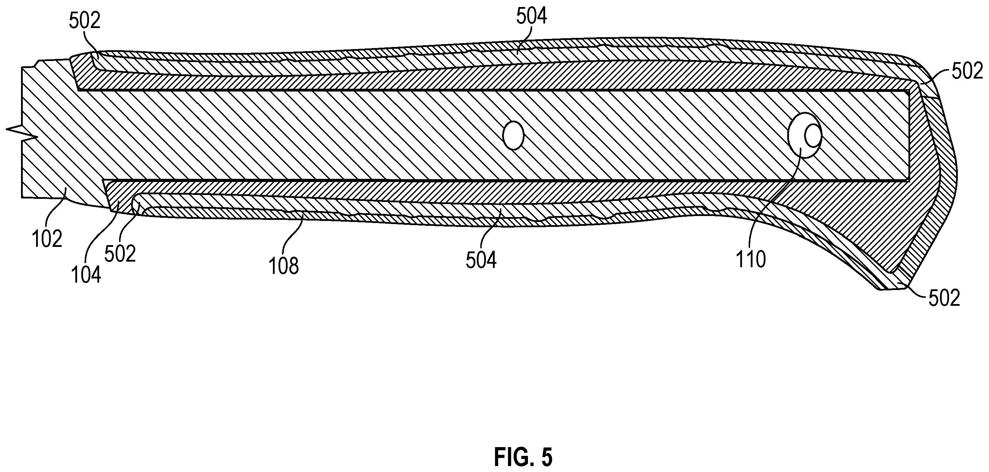

FIG. 5 illustrates an example of a hammer handle configured as disclosed herein after water soluble materials (such as PVA) have been removed. As illustrated, there is the forging 102 encapsulated by the PP 104 layer and the TPE 108 layer, with the pin 110 placed in the hole of the forging 102 handle. Where the PVA layer once existed there are now through holes 502 and flow channels 504. During the dissolving process, water enters the through holes 502, then proceeds to dissolve the PVA, leaving the flow channels 504 in place of the PVA. Upon completion of the dissolving process, the handle is left with the forging 102 encapsulated by the PP 104 layer and the TPE 108 layer, with some flow channels 504 existing where PVA had previously been located. It is noted that the flow channels 504 do not, preferably, completely encircle the handle, allowing portions of the TPE 108 layer to directly bond to the PP 102 layer. The result is a handle which has some portions which are the forging 102, the PP 104 layer, and the TPE 108 layer, and other portions which are the forging 102, the PP 104 layer, an air gap (i.e., a flow channel 504), and the TPE 108 layer.

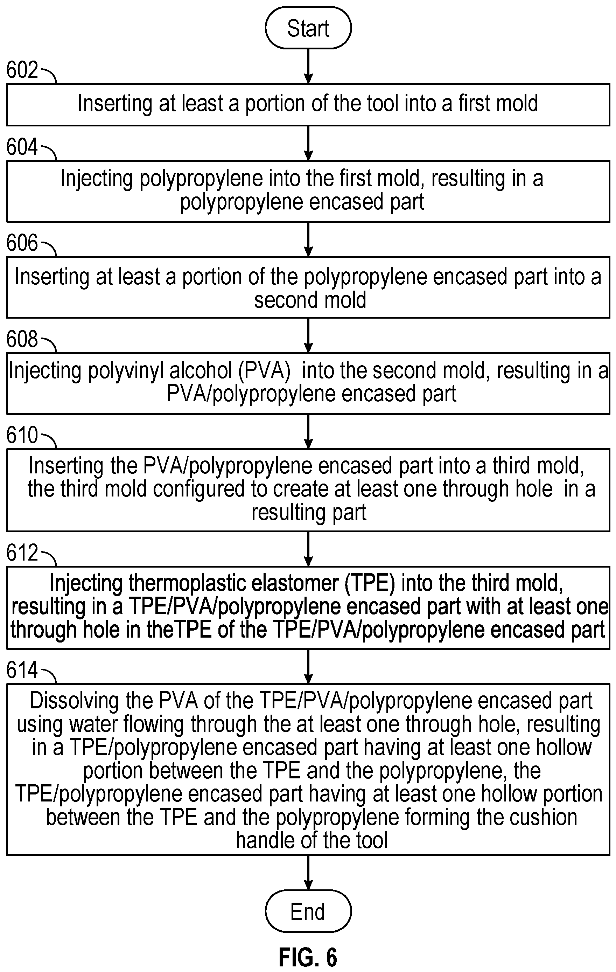

FIG. 6 illustrates an example method embodiment. As illustrated, an exemplary method can include: inserting at least a portion of the tool (e.g., the handle portion of a tool) into a first mold (602), and injecting polypropylene (PP) into the first mold, resulting in a polypropylene encased part (604). This can be considered the "first shot" of a multi-shot injection molding process. Next, the method continues by inserting at least a portion of the polypropylene encased part into a second mold (606) (e.g., most of the handle portion of the tool that was just covered by polypropylene; there may be instances where one does not want to include the entirety of the polypropylene covered portion into the second mold), and injecting polyvinyl alcohol (PVA) into the second mold, resulting in a PVA/polypropylene encased part (608). This can be considered the "second shot" of the multi-shot injection molding process. Next, the method continues by inserting the PVA/polypropylene encased part into a third mold, the third mold configured to create at least one through hole in a resulting part (610). and injecting thermoplastic elastomer (TPE) into the third mold, resulting in a TPE/PVA/polypropylene encased part with at least one through hole in the TPE of the TPE/PVA/polypropylene encased part (612). This can be considered to be a "third shot" of the multi-shot injection molding process. Next, the method concludes by dissolving the PVA of the TPE/PVA/polypropylene encased part using water flowing through the at least one through hole, resulting in a TPE/polypropylene encased part having at least one hollow portion between the TPE and the polypropylene, the TPE/polypropylene encased part having at least one hollow portion between the TPE and the polypropylene forming the cushion handle of the tool (614).

In some configurations, at least one of the first mold, the second mold, and the third mold are combined together, resulting in a multi-shot mold.

In some configurations, the at least one through hole connects to at least one flow channel which extends along the length of a handle of the tool.

In some configurations, the second mold causes the PVA to partially encircle the polypropylene encased part.

In some configurations, the illustrated method can further include inserting a pin into the cushion handle and the tool, resulting in an assembled grip.

In some configurations, the tool is a hammer, and the at least a portion of the tool inserted into the first mold comprises a handle of the hammer.

In some configurations, the second mold causes the PVA to be injected in at least two disjointed portions.

Use of language such as "at least one of X, Y, and Z," "at least one of X, Y, or Z," "at least one or more of X, Y, and Z," "at least one or more of X, Y, or Z," "at least one or more of X, Y, and/or Z," or "at least one of X, Y, and/or Z," are intended to be inclusive of both a single item (e.g., just X, or just Y, or just Z) and multiple items (e.g., {X and Y}, {X and Z}, {Y and Z}, or {X, Y, and Z}). The phrase "at least one of" and similar phrases are not intended to convey a requirement that each possible item must be present, although each possible item may be present.

The various embodiments described above are provided by way of illustration only and should not be construed to limit the scope of the disclosure. Various modifications and changes may be made to the principles described herein without following the example embodiments and applications illustrated and described herein, and without departing from the spirit and scope of the disclosure. For example, unless otherwise explicitly indicated, the steps of a process or method may be performed in an order other than the example embodiments discussed above. Likewise, unless otherwise indicated, various components may be omitted, substituted, or arranged in a configuration other than the example embodiments discussed above.

Further aspects of the present disclosure are provided by the subject matter of the following clauses.

A method for manufacturing a cushion handle of a tool, the method comprising: inserting at a replica mold core of least a portion of the tool into a first mold; injecting polypropylene into the first mold, resulting in a polypropylene encased part; inserting at least a portion of the polypropylene encased part into a second mold; injecting polyvinyl alcohol (PVA) into the second mold, resulting in a PVA/polypropylene encased part; inserting the PVA/polypropylene encased part into a third mold, the third mold configured to create at least one through hole in a resulting part; injecting thermoplastic elastomer (TPE) into the third mold, resulting in a TPE/PVA/polypropylene encased part with at least one through hole in the TPE of the TPE/PVA/polypropylene encased part; dissolving the PVA of the TPE/PVA/polypropylene encased part using water flowing through the at least one through hole, resulting in a TPE/polypropylene encased part having at least one hollow portion between the TPE and the polypropylene, the TPE/polypropylene encased part having at least one hollow portion between the TPE and the polypropylene forming the cushion handle of the tool.

The method of any preceding clause, wherein at least one of the first mold, the second mold, and the third mold are combined together, resulting in a multi-shot mold.

The method of any preceding clause, wherein the at least one through hole is connected to at least one flow channel which extends along the length of a handle of the tool.

The method of any preceding clause, wherein the second mold causes the PVA to partially encircle the polypropylene encased part.

The method of any preceding clause, further comprising: replacing the replica mold core with the least a portion of the tool; and inserting a pin into the cushion handle and the tool, resulting in an assembled grip.

The method of any preceding clause, wherein the tool is a hammer, and the replica mold core of the at least a portion of the tool inserted into the first mold matches a handle of the hammer.

The method of any preceding clause, wherein the second mold causes the PVA to be injected in at least two disjointed portions.

A handle, comprising: a replica mold core of at least a portion of a tool; a layer of polypropylene (PP) encompassing the replica mold core, the layer of PP having an interior portion bonded to the at least a portion of the tool and an exterior portion; a layer of thermoplastic elastomer (TPE) encompassing the replica mold core, the layer of TPE bonded to a first portion of the exterior portion of the layer of PP, wherein a remaining portion of the exterior portion of the PP comprises at least one hollow portion between the layer of PP and the layer of TPE.

The handle of any preceding clause, wherein the at least one hollow portion is formed by: inserting the replica mold core covered by the layer of PP into a PVA mold; injecting polyvinyl alcohol (PVA) into the PVA mold, resulting in a PVA/PP encased part, the PVA covering the remaining portion of the exterior portion of the PP; inserting the PVA/PP encased part into a TPE mold, the TPE mold configured to create at least one through hole in a resulting part; injecting TPE into the TPE mold, resulting in a TPE/PVA/polypropylene encased part with at least one through hole in the TPE of the TPE/PVA/polypropylene encased part; dissolving the PVA of the TPE/PVA/polypropylene encased part using water flowing through the at least one through hole, resulting in a TPE/polypropylene encased part having the at least one hollow portion between the layer of PP and the layer of TPE.

The handle of any preceding clause, wherein the PVA mold and the TPE mold are combined together, resulting in a multi-shot mold.

The handle of any preceding clause, wherein the at least one through hole is connected to at least one piece of PVA which, when dissolved, becomes a flow channel which extends along the length of a handle of the tool.

The handle of any preceding clause, wherein the PVA mold causes the PVA to partially encircle the polypropylene encased part.

The handle of any preceding clause, wherein the PVA mold causes the PVA to be injected in at least two disjointed portions.

The handle of any preceding clause, further comprising: a pin which connects the layer of PP and the layer to TPE to the tool, connecting through holes in the layer of PP, the layer of TPE, and the tool, wherein the replica mold core has been replaced with the tool.

The handle of any preceding clause, wherein the tool is a hammer, and the replica mold core of at least a portion of the tool matches a handle of the hammer.

A striking object comprising: a head; and a handle, the handle encircled by: a layer of polypropylene (PP), the layer of PP having an interior portion bonded to the handle and an exterior portion; and a layer of thermoplastic elastomer (TPE) encompassing bonded to a first portion of the exterior portion of the layer of PP, wherein a remaining portion of the exterior portion of the PP comprises at least one hollow portion between the layer of PP and the layer of TPE.

The striking object of any preceding clause, wherein the at least one hollow portion is formed by: inserting a replica mold core of the handle covered by the layer of PP into a PVA mold; injecting polyvinyl alcohol (PVA) into the PVA mold, resulting in a PVA/PP encased part, the PVA covering the remaining portion of the exterior portion of the PP; inserting the PVA/PP encased part into a TPE mold, the TPE mold configured to create at least one through hole in a resulting part; injecting TPE into the TPE mold, resulting in a TPE/PVA/polypropylene encased part with at least one through hole in the TPE of the TPE/PVA/polypropylene encased part; dissolving the PVA of the TPE/PVA/polypropylene encased part using water flowing through the at least one through hole, resulting in a TPE/polypropylene encased part having the at least one hollow portion between the layer of PP and the layer of TPE.

The striking object of any preceding clause, wherein the PVA mold and the TPE mold are combined together, resulting in a multi-shot mold.

The striking object of any preceding clause, wherein the at least one through hole is connected to at least one piece of PVA which, when dissolved, becomes a flow channel which extends along the length of the handle.

The striking object of any preceding clause, wherein the PVA mold causes the PVA to partially encircle the polypropylene encased part.

## Claims

1. A method for manufacturing a cushion handle of a tool, the method comprising:
inserting at a replica mold core of least a portion of the tool into a first mold;
injecting polypropylene into the first mold, resulting in a polypropylene encased part;
inserting at least a portion of the polypropylene encased part into a second mold;
injecting polyvinyl alcohol (PVA) into the second mold, resulting in a PVA/polypropylene encased part;
inserting the PVA/polypropylene encased part into a third mold, the third mold configured to create at least one through hole in a resulting part;
injecting thermoplastic elastomer (TPE) into the third mold, resulting in a TPE/PVA/polypropylene encased part with at least one through hole in the TPE of the TPE/PVA/polypropylene encased part;
dissolving the PVA of the TPE/PVA/polypropylene encased part using water flowing through the at least one through hole, resulting in a TPE/polypropylene encased part having at least one hollow portion between the TPE and the polypropylene,
the TPE/polypropylene encased part having at least one hollow portion between the TPE and the polypropylene forming the cushion handle of the tool.

2. The method of claim 1, wherein at least one of the first mold, the second mold, and the third mold are combined together, resulting in a multi-shot mold.

3. The method of claim 1 or 2, wherein the at least one through hole is connected to at least one flow channel which extends along the length of a handle of the tool.

4. The method of any of the preceding claims, wherein the second mold causes the PVA to partially encircle the polypropylene encased part and/or the second mold causes the PVA to be injected in at least two disjointed portions.

5. The method of any of the preceding claims, further comprising:
replacing the replica mold core with the least a portion of the tool; and
inserting a pin into the cushion handle and the tool, resulting in an assembled grip.

6. The method of any of the preceding claims, wherein the tool is a hammer, and the replica mold core of the at least a portion of the tool inserted into the first mold matches a handle of the hammer.

7. A handle, comprising:
a replica mold core of at least a portion of a tool;
a layer of polypropylene (PP) encompassing the replica mold core, the layer of PP having an interior portion bonded to the at least a portion of the tool and an exterior portion;
a layer of thermoplastic elastomer (TPE) encompassing the replica mold core, the layer of TPE bonded to a first portion of the exterior portion of the layer of PP, wherein a remaining portion of the exterior portion of the PP comprises at least one hollow portion between the layer of PP and the layer of TPE.

8. The handle of claim 7, wherein the at least one hollow portion is formed by:
inserting the replica mold core covered by the layer of PP into a PVA mold;
injecting polyvinyl alcohol (PVA) into the PVA mold, resulting in a PVA/PP encased part, the PVA covering the remaining portion of the exterior portion of the PP;
inserting the PVA/PP encased part into a TPE mold, the TPE mold configured to create at least one through hole in a resulting part;
injecting TPE into the TPE mold, resulting in a TPE/PVA/polypropylene encased part with at least one through hole in the TPE of the TPE/PVA/polypropylene encased part;
dissolving the PVA of the TPE/PVA/polypropylene encased part using water flowing through the at least one through hole, resulting in a TPE/polypropylene encased part having the at least one hollow portion between the layer of PP and the layer of TPE;
wherein optionally the PVA mold and the TPE mold are combined together, resulting in a multi-shot mold.

9. The handle of claim 8, wherein the at least one through hole is connected to at least one piece of PVA which, when dissolved, becomes a flow channel which extends along the length of a handle of the tool.

10. The handle of 8 or 9, wherein the PVA mold causes the PVA to partially encircle the polypropylene encased part and /or the PVA mold causes the PVA to be injected in at least two disjointed portions.

11. The handle of any of claims 7 to 10, further comprising:
a pin which connects the layer of PP and the layer to TPE to the tool, connecting through holes in the layer of PP, the layer of TPE, and the tool, wherein the replica mold core has been replaced with the tool.

12. The handle of any of claims 7 to 11, wherein the tool is a hammer, and the replica mold core of at least a portion of the tool matches a handle of the hammer.

13. A striking object comprising:
a head; and
a handle,
the handle encircled by:
a layer of polypropylene (PP), the layer of PP having an interior portion bonded to the handle and an exterior portion; and
a layer of thermoplastic elastomer (TPE) encompassing bonded to a first portion of the exterior portion of the layer of PP, wherein a remaining portion of the exterior portion of the PP comprises at least one hollow portion between the layer of PP and the layer of TPE.

14. The striking object of claim 13, wherein the at least one hollow portion is formed by:
inserting a replica mold core of the handle covered by the layer of PP into a PVA mold;
injecting polyvinyl alcohol (PVA) into the PVA mold, resulting in a PVA/PP encased part, the PVA covering the remaining portion of the exterior portion of the PP;
inserting the PVA/PP encased part into a TPE mold, the TPE mold configured to create at least one through hole in a resulting part;
injecting TPE into the TPE mold, resulting in a TPE/PVA/polypropylene encased part with at least one through hole in the TPE of the TPE/PVA/polypropylene encased part;
dissolving the PVA of the TPE/PVA/polypropylene encased part using water flowing through the at least one through hole, resulting in a TPE/polypropylene encased part having the at least one hollow portion between the layer of PP and the layer of TPE;
wherein optionally the PVA mold and the TPE mold are combined together, resulting in a multi-shot mold.

15. The striking object of claim 14, wherein the at least one through hole is connected to at least one piece of PVA which, when dissolved, becomes a flow channel which extends along the length of the handle.

16. The striking object of claim 14 or 15, wherein the PVA mold causes the PVA to partially encircle the polypropylene encased part and/or the PVA mold causes the PVA to be injected in at least two disjointed portions.
